(19) Europäisches Patentamt
European Patent Office
Office européen des brevets

(11) Veröffentlichungsnummer: **0 392 349 B1**

(12) **EUROPÄISCHE PATENTSCHRIFT**

(45) Veröffentlichungstag der Patentschrift: **12.01.94**

(51) Int. Cl.5: **C08L 61/20**, D06M 15/45, //D06M101:06

(21) Anmeldenummer: **90106514.4**

(22) Anmeldetag: **05.04.90**

# (54) Verfahren zur Herstellung wässriger Lösungen von N-Methylolethers.

(30) Priorität: **13.04.89 DE 3912084**

(43) Veröffentlichungstag der Anmeldung:
**17.10.90 Patentblatt 90/42**

(45) Bekanntmachung des Hinweises auf die Patenterteilung:
**12.01.94 Patentblatt 94/02**

(84) Benannte Vertragsstaaten:
**AT BE CH DE DK ES FR GB IT LI NL SE**

(56) Entgegenhaltungen:
**US-A- 4 280 812**

**Derwent Accession.No. 88-365906, Ouestel Telesystems (WPIL) Derwent Publications LTD., London ; & JP-A-63277227**

**Chemicals Abstracts, 1987, Band 107, Zusammenfassung Nr. 177901, J.Appl.Pol.Sc, Band 20, 1976, s.2631-2642.**

(73) Patentinhaber: **BASF Aktiengesellschaft**
**Carl-Bosch-Strasse 38**
**D-67063 Ludwigshafen(DE)**

(72) Erfinder: **Bereck, Attila, Dr.**
**Andreas-Strasse 43**
**D-5632 Wermelskirchen(DE)**
Erfinder: **Flory, Klaus, Dr.**
**Im Schilling 2**
**D-6906 Leimen(DE)**
Erfinder: **Kummer, Matthias, Dr.**
**B 4,15**
**D-6800 Mannheim 1(DE)**
Erfinder: **Reinert, Friedrich, Dr.**
**In der Dreispitz 11**
**6706 Wachenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 392 349 B1

## Beschreibung

Die vorliegende Erfindung betrifft ein verbessertes Verfahren zur Herstellung wäßriger Lösungen von N-Methylolethern von Carbonsäureamiden, Urethanen, Harnstoffen und Aminotriazinen durch Umsetzung der entsprelchenden N-Methylolverbindungen mit einem Alkohol in wäßriger Phase bei einem pH-Wert von 0 bis 3 und anschließende Einstellung des pH-Wertes der Lösung auf 4 bis 10.

Die hauptsächlich als Ausrüstungsmittel für cellulosehaltige textile Materialien dienenden N-Methylolether-Lösungen werden üblicherweise durch Veretherung der entsprechenden N-Methylolverbindungen in Gegenwart einer Mineralsäure, zum Beispiel Salzsäure, Schwefelsäure oder Phosphorsäure, hergestellt. Petersen zeigt im Handbook of Fiber Science and Technology: Vol. II, Chemical Processing of Fibers and fabrics, Functional Finishes, Part A, Marcel Dekker, Inc., 1983, insbesondere auf S. 200 bis 205 auf, daß es sich hierbei um ein System von Gleichgewichtsreaktionen handelt und das Brutto-Gleichgewicht normalerweise mehr auf der Seite der N-Methylolverbindung als auf der des N-Methylolethers liegt.

Auf Seite 205 bis 217 der bezeichneten Literaturstelle nennt Petersen übliche Katalysatoren für den Ausrüstungsvorgang der Textilien, u.a. auch Magnesiumsalze in Kombination mit Tetrafluoroboraten (S. 209/210) und Zinktetrafluoroborat (S. 210). Diese Hilfsmittel werden üblicherweise erst unmittelbar vor dem Ausrüstungsprozeß der Ausrüstungsflotte zugesetzt.

Auf Seite 54 bis 205 der bezeichneten Literaturstelle werden von Petersen die generellen Herstellungsprinzipien für Textilausrüstungsmittel, die aus Verbindungen mit N-H-Gruppierungen, Formaldehyd und gegebenenfalls einem Alkohol aufgebaut sind, beschrieben.

Die Literaturstelle Chemical Abstracts 1987, Band 107, Zusammenfassung Nr. 177 901 y offenbart die Verwendung von Natriumtetrafluoroborat zusammen mit Magnesiumchlorid als Katalysator für die Vernetzungsreaktion bei der Ausrüstung von cellulosehaltigen textilen Materialien mit wäßrigen Lösungen von Methylolverbindungen.

Die Literaturstelle Journal of Applied Polymer Science, Band 20, S. 2631-2642, 1976, offenbart die analoge Verwendung eines Bortrifluorid-Essigsaure-Komplexes in Verbindung mit Magnesiumchlorid als Vernetzungskatalysator bei der Ausrüstung von cellulosehaltigen textilen Materialien mit wäßrigen Lösungen von Methylolverbindungen.

In Ullmanns Encyklopädie der technischen Chemie, 4. Aufl., Bd. 11, 1976, S. 617, werden Bortrifluorid und seine Addukte als Katalysatoren für Kondensations- und Polymerisationsreaktionen, speziell für die Dehydratation von Alkoholen, Säuren oder Ketonen, empfohlen.

Aufgabe der vorliegenden Erfindung war es, ein Verfahren bereitzustellen, das wäßrige Lösungen von N-Methylolethern mit hohem Veretherungsgrad liefert, ohne daß dabei ein großer Überschuß an Alkohol erforderlich ist.

Demgemäß wurde ein Verfahren zur Herstellung wäßriger Lösugnen von N-Methylolethern von Carbonsäureamiden, Urethanen, Harnstoffen und Aminotriazinen durch Umsetzung der entsprechenden Methylolverbindungen mit einem Alkohol in wäßriger Phase bei einem pH-Wert von 0 bis 3 und anschließende Einstellung des pH-Wertes auf 4 bis 10 gefunden, welches dadurch gekennzeichnet ist, daß man die Umsetzung in Gegenwart von 0,001 bis 0,2 mol pro Mol N-Methylol-Gruppe Bortrifluorid, eine Bortrifluorid-Additionsverbindung oder Tetrafluorborsäure durchführt.

Bei Verwendung von Bortrifluorid wird dieses zweckmäßigerweise in die Reaktionslösung eingegast. Einfacher in der Handhabung sind die unter Normalbedingungen flüssigen Addukte von Bortrifluorid, beispielsweise an Methanol, Dimethylether, Diethylether, Tetrahydrofuran, Wasser, Essigsäure, Phosphorsäure und Phenol, sowie wäßrige Tetrafluorborsäure. Tetrafluorborsäure kann auch in situ aus ihren Metallsalzen und einer anderen Mineralsäure erzeugt werden. Bortrifluorid und Bortrifluorid-Addukte werden gegenüber Tetrafluorborsäure und ihren Salzen bevorzugt.

Für das erfindungsgemäße Verfahren ist es notwendig, die genannten BorFluor-Verbindungen in katalytischen Mengen von 0,001 bis 0,2 mol, insbesondere 0,01 bis 0,1 mol pro Mol N-Methylol-Gruppe einzusetzen.

Das erfindungsgemäße Herstellungsverfahren wäßriger Lösungen von N-Methylolethern wird in stark saurer Lösung, etwa bei pH 0 bis 3, insbesondere bei pH 1 bis 2, durchgeführt. Oberhalb von pH 3 liefert das erfindungsgemäße Verfahren deutlich schlechtere Ergebnisse. Zur Absenkung des pH-Wertes können die üblichen Mineralsäuren verwendet werden.

In der Regel setzt man hierbei wäßrige Lösungen der N-Methylolverbindungen mit einem Feststoffgehalt von üblicherweise 40 bis 85 Gew.% und einem pH-Wert von normalerweise 4 bis 10 mit 1 bis 1,5 mol, insbesondere 1,1 bis 1,35 mol eines Alkohols pro N-Methylolgruppe bei Temperaturen von 20 bis 60 °C, insbesondere 30 bis 50 °C, miteinander um. Die Reaktionszeit bis zum Erreichen des gewünschten Veretherungsgrades liegt normalerweise zwischen 0,5 und 8 Stunden, in den meisten Fällen beträgt sie 2

bis 5 Stunden. Anschließend wird der pH-Wert mittels einer üblichen Base, beispielsweise Natron- oder Kalilauge, wieder auf 4 bis 10, insbesondere 4 bis 7, eingestellt.

Die so erhaltenen Lösungen der N-Methylolether werden durch Verdünnen mit Wasser in der Regel auf einen Wassergehalt von 20 bis 80 Gew.%, insbesondere 35 bis 60 Gew.%, eingestellt. Der Veretherungsgrad der N-Methylolgruppen beträgt bei dem erfindungsgemäßen Verfahren normalerweise 70 bis 90 %, im Gegensatz zu nur 30 bis 50 % bei einem analogen Verfahren ohne Mitverwendung von Bor-Fluor-Verbindungen.

Das erfindungsgemäße Verfahren betrifft insbesondere die Herstellung wäßriger Lösungen der N-Methylolether der allgemeinen Formel I

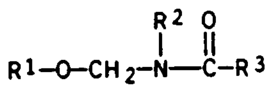 I

in der

- $R^1$ für eine gegebenenfalls durch Sauerstoffatome unterbrochene $C_1$-$C_{10}$-Alkylgruppe steht,
- $R^2$ Wasserstoff, die Gruppe $CH_2OR^1$ oder einen $C_1$-$C_8$-Alkylrest bezeichnet, der noch zusätzlich Hydroxylgruppen und/oder $C_1$-$C_4$-Alkoxygruppen als Substituenten tragen und durch Sauerstoffatome und/oder $C_1$-$C_4$-Alkylgruppen tragende Stickstoffatome unterbrochen sein kann, und
- $R^3$ Wasserstoff, einen $C_1$-$C_{10}$-Alkylrest, einen $C_1$-$C_{10}$-Alkoxyrest, der durch Sauerstoffatome unterbrochen sein kann, oder die Gruppe ($-NR^2-CH_2OR^1$) bedeutet,

wobei die Reste $R^2$ und $R^3$ zu einem fünf- oder sechsgliedrigen Ring verbunden und im Falle von $R^3$ = ($-NR^2-CH_2OR^1$) außerdem zwei solcher Ringe über die zu den Amidstickstoffen $\alpha$-ständigen C-Atome der Reste $R^2$ zu einem bicyclischen System kondensiert sein können, durch Umsetzung der entsprechenden N-Methylolverbindungen der allgemeinen Formel II

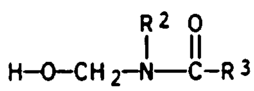 II

mit Alkoholen der allgemeinen Formel III

$R^1$-OH III.

Der Rest $R^1$ steht für eine gegebenenfalls durch Sauerstoffatome unterbrochene $C_1$-$C_{10}$-Alkylgruppe. Als Beispiel für $R^1$ sind zu nennen: n-Butyl, iso-Butyl, sec.-Butyl, tert.-Butyl, n-Pentyl, n-Hexyl, 2-Ethylhexyl und 2-Methoxyethyl; von besonderem Interesse sind die $C_1$-$C_3$-Alkylgruppen Ethyl, n-Propyl, iso-Propyl und insbesondere Methyl.

Der Rest $R^2$ bezeichnet Wasserstoff, die Gruppe $CH_2OR^1$ und insbesondere einen $C_1$-$C_8$-Alkylrest, der noch zusätzliche Hydroxylgruppen und/oder $C_1$-$C_4$-Alkoxygruppen als Substituenten tragen und durch Sauerstoffatome und/oder durch $C_1$-$C_4$-Alkylgruppen tragende Stickstoffatome unterbrochen sein kann.

Der Rest $R^3$ bedeutet Wasserstoff, einen $C_1$-$C_{10}$-Alkylrest, einen $C_1$-$C_{10}$-Alkoxyrest, der durch Sauerstoffatome unterbrochen sein kann, und insbesondere die Gruppe ($-NR^2-CH_2OR^1$).

Das erfindungsgemäße Verfahren hat besondere Bedeutung für diejenigen N-Methylolether I, bei denen die Reste $R^2$ und $R^3$ zu einem fünf- oder sechsgliedrigen Ring verbunden sind. Im Falle von $R^3$ = ($-NR^2-CH_2OR^1$) können außerdem zwei solcher Ringe über die zu den Amidstickstoffen $\alpha$-ständigen C-Atome der Reste $R^2$ zu einem bicyclischen System kondensiert sein.

Als Beispiele für N-Methylolether I, die nach dem erfindungsgemäßen Verfahren in wäßriger Lösung hergestellt werden können, sind zu nennen:

- Amide von $C_1$-$C_{11}$-Carbonsäuren, beispielsweise Ameisensäure, Essigsäure, Propionsäure, Buttersäure oder Valeriansäure, welche am Stickstoff ein oder zwei $CH_2OR^1$-Gruppen tragen,
- Carbamate mit $C_1$-$C_{10}$-Alkylgruppen im Esterrest, die durch Sauerstoffatome unterbrochen sein können, beispielsweise Methyl, Ethyl, n-Propyl, iso-Propyl, 2-Methoxyethyl oder n-Butyl, welche am Stickstoff zwei $CH_2OR^1$-Gruppen tragen,
- Harnstoff mit 1 bis 4 $CH_2OR^1$-Gruppen an den Stickstoffatomen,

- cyclische Ethylenharnstoffe der allgemeinen Formel Ia

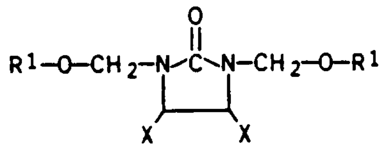

Ia

in der die Reste X verschieden oder vorzugsweise gleich sind und für Wasserstoff, Hydroxylgruppen oder $C_1$-$C_4$-Alkoxygruppen, beispielsweise Methoxy oder Ethoxy, stehen,
- cyclische Propylenharnstoffe der allgemeinen Formel Ib

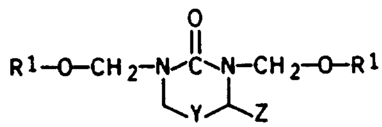

Ib

in der Y für $CH_2$, CHOH, $C(CH_3)_2$, ein O-Atom oder ein eine $C_1$-$C_4$-Alkylgruppe tragendes N-Atom steht und Z Wasserstoff oder eine $C_1$-$C_4$-Alkoxygruppe, beispielsweise Methoxy oder Ethoxy, bezeichnet,
- bicyclische Glyoxaldiharnstoffe der allgemeinen Formel Ic

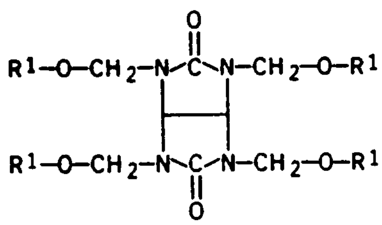

Ic

- bicyclische Malondialdehyddiharnstoffe der allgemeinen Formel Id

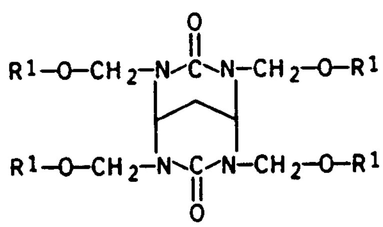

Id

Weiterhin betrifft das erfindungsgemäße Verfahren die Herstellung wäßriger Lösungen von Melaminderivaten der allgemeinen Formel IV

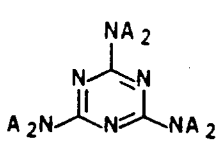

IV

in der die Reste A gleich oder verschieden sind und für Wasserstoff oder die Gruppe $CH_2OR^1$ stehen, wobei mindestens einer der Reste A die Bedeutung $CH_2OR^1$ haben muß, durch Umsetzung der entsprechenden N-Methylolmelamine der allgemeinen Formel V

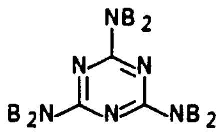

V

in der die zu A analogen Reste B Wasserstoff oder die Gruppe $CH_2OH$ bezeichnen, mit Alkoholen der allgemeinen Formel III.

Als Beispiele für Melaminderivate IV, die nach dem erfindungsgemäßen Verfahren in wäßriger Lösung hergestellt werden können, sind Methoxymethylmelamin, Bis(methoxymethyl)melamin, Tris-(methoxymethyl)melamin, Tetrakis(methoxymethyl)melamin, Pentakis(methoxymethyl)melamin und Hexakis-(methoxymethyl)melamin sowie die analogen Ethoxymethyl- und Isopropyloxymethyl-Verbindungen zu nennen.

Die nach dem erfindungsgemäßen Verfahren hergestellten wäßrigen Lösungen von N-Methylolethern finden hauptsächlich Verwendung zur formaldehydarmen Ausrüstung von cellulosehaltigen textilen Materialien. Die enthaltenen Borverbindungen bewirken beim Ausrüstungsprozeß zusammen mit üblichen Katalysatoren wie Magnesium- oder Zinksalzen die Kondensation des Ausrüstungsmittels mit dem Gewebe. Die Lösungen haben gegenüber den Produkten, die nach herkömmlichen Verfahren hergestellt worden sind, den Vorteil, bei gleich guten Ausrüstungseigenschaften, schonenden Ausrüstungsbedingungen wie niedrigerer Kondensationstemperatur oder kürzerer Kondensationszeit und geringerer Menge an Kondensationskatalysator wesentlich geringere Werte an abspaltbarem Formaldehyd auf den ausgerüsteten Textilien zu liefern. Die mit den Borverbindungen "vorkatalysierten" Ausrüstungslösungen sind unbegrenzt lagerstabil und außerdem verwenderfreundlich, da sie der Textilausrüstungsbetrieb wie die herkömmlichen Lösungen ohne Borverbindungen einsetzen kann, ohne beispielsweise noch separate Zusätze wie Natriumtetrafluoroborat hinzufügen zu müssen.

Das erfindungsgemäße Herstellungsverfahren wäßriger Lösungen von N-Methylolethern zeichnet sich durch eine geringe thermische Belastung während der Umsetzung, was nur zu einem geringen Anteil an Neben- oder Zersetzungsprodukten führt, einen niedrigen Gehalt an gut löslichen anorganischen Salzen in den erhaltenen meist hochkonzentrierten wäßrigen Produktlösungen, wodurch die Gefahr des Auskristallisierens von Salz vermindert wird, einen nur geringen Überschußbedarf an Alkohol, wodurch sich ein aufwendiges Abtrennen von nicht umgesetztem Alkohol aus dem fertigen Produkt erübrigt, und vor allem einen hohen Veretherungsgrad der N-Methylolgruppen von normalerweise 70 bis 90 % aus. Die für die Veretherungsreaktion eingesetzte Menge an Borverbindung, die ja bei der Umsetzung erhalten bleibt, reicht beim Ausrüstungsprozeß aus, um die oben beschriebene vorteilhafte Wirkung hervorzurufen.

Beispiel 1

Veretherung in Gegenwart von Tetrafluorborsäure

215,3 g einer 82,6 gew.%igen wäßrigen N,N'-Dimethylol-4,5-dihydroxyethylenharnstoff-Lösung (entsprechend 1,0 mol des Harnstoffderivates) mit einem pH-Wert von 8,9 wurden mit 86,4 g Methanol (entsprechend 2,7 mol) vermischt und anschließend mit 16,3 g einer 25 gew.%igen wäßrigen Tetrafluorborsäure-Lösung (entsprechend 0,05 mol $HBF_4$) versetzt, wobei der pH-Wert der Mischung auf 1,5 sank. Die Reaktionsmischung wurde 5 Stunden bei 35 °C gerührt. Der Fortgang der Umsetzung und die Bildung von Haupt- und Nebenprodukten wurden durch chromatographische Methoden verfolgt.

Nach Verdünnen der Reaktionsmischung mit 92 g Wasser und Einstellen des pH-Wertes auf 5,0 mit 3,0 g einer Mischung aus gleichen Gewichtsteilen 50 gew.%iger Natronlauge und 50 gew.%iger Kalilauge erhielt man 413 g einer wäßrigen Lösung von N,N'-Dimethoxymethyl-4,5-dihydroxyethylenharnstoff mit einem Wassergehalt von 39,7 Gew.%. Der Veretherungsgrad der N-Methylolgruppen betrug 78 %.

Beispiel 2

Veretherung in Gegenwart von Natriumtetrafluoroborat/Schwefelsäure

193 g einer 83 gew.%igen wäßrigen N,N'-Dimethylol-4,5-dihydroxyethylenharnstoff-Lösung (entsprechend 0,9 mol des Harnstoffderivates) mit einem pH-Wert von 8,9 wurden mit 69,1 g Methanol (entsprechend 2,16 mol) vermischt und anschließend mit 7,6 g einer Mischung aus gleichen Gewichtsteilen Natriumtetrafluoroborat und 50 gew.%iger Schwefelsäure (entsprechend 0,035 mol $NaBF_4$) versetzt, wobei

der pH-Wert der Reaktionsmischung auf 1,5 sank. Nach 5 Stunden Rühren bei 35 °C war die Umsetzung beendet. Der Fortgang der Reaktion und die Bildung von Haupt- und Nebenprodukten wurden durch chromatographische Methoden verfolgt.

Nach Verdünnen der Reaktionsmischung mit 166 g Wasser und Einstellen des pH-Wertes auf 5,0 mit 2,8 g 50 gew.%iger Natronlauge erhielt man 438 g einer wäßrigen Lösung von N,N' -Dimethoxymethyl-4,5-dihydroxyethylenharnstoff mit einem Wassergehalt von 53 Gew.%. Der Veretherungsgrad der N-Methylolgruppen betrug 86 %.

Vergleichsbeispiel A

Veretherung in Gegenwart von Schwefelsäure allein

256 g einer 70 gew.%igen wäßrigen N,N'-Dimethylol-4,5-dihydroxyethylenharnstoff-Lösung (entsprechend 1,0 mol des Harnstoffderivates) mit einem pH-Wert von 8,6 wurden mit 70,4 g Methanol (entsprechend 2,2 mol) vermischt und anschließend mit 6,2 g einer 75 gew.%igen Schwefelsäure versetzt, wobei der pH-Wert der Reaktionsmischung auf 1,3 sank. Nach Erwärmen auf 35 °C wurde die Mischung 5 Stunden bei der angegebenen Temperatur gerührt. Der Fortgang der Reaktion und die Bildung von Haupt- und Nebenprodukten wurden durch chromatographische Methoden verfolgt.

Die Aufarbeitung zu einer wäßrigen Lösung mit N,N'-Dimethoxymethyl-4,5-dihydroxyethylenharnstoff als wesentlichem Bestandteil und einem Wassergehalt von 53 Gew.% erfolgte analog zu Beispiel 2. Der Veretherungsgrad der N-Methylolgruppen betrug 37 %.

Beispiel 3

Veretherung in Gegenwart von Bortrifluorid-Methanol-Addukt

Zu 2000 g einer 70 gew.-%igen wäßrigen N,N'-Dimethylol-4,5-dihydroxyethylenharnstoff-Lösung (entsprechend 7,87 mol des Harnstoffderivates) wurden bei Raumtemperatur unter Rühren 580 g Methanol (entsprechend 18,1 mol) zugesetzt. Durch Zugabe von 25 g einer 51 gew.-%igen Lösung von Bortrifluorid-Methanol-Addukt in Methanol (entsprechend 0,13 mol $BF_3 \cdot CH_3OH$) wurde der pH-wert der Lösung von 5,9 auf 1,6 abgesenkt. Nach Erwärmen auf 40 °C wurde 4 Stunden bei der angegebenen Temperatur gerührt. Der Fortgang der Umsetzung und die Bildung von Haupt- und Nebenprodukten wurde durch chromatographische Methoden verfolgt.

Es wurde auf Raumtemperatur abgekühlt und der pH-Wert der Lösung durch Zugabe von 38,2 g einer 25 gew.-%igen Natronlauge auf 5,7 angehoben. Nach Destillation nicht umgesetzten Methanols im Vakuum bei 60 bis 80 Torr und 40 °C erhielt man eine 75 gew.-%ige gebrauchsfertige Vernetzerlösung.

Vergleichsbeispiel B

Es wurde eine 73,1 gew.-%ige wäßrige N,N'-Dimethoxymethyl-4,5-dihydroxyethylenharnstoff-Lösung mit einem pH-Wert von 5,2 durch Veretherung der Methylolgruppen nach den üblichen Methoden bis zu einem Grad von ca. 50 % nergestellt.

Anwendungstechnische Eigenschaften bei der Textilausrüstung

Hemdenpopelin aus 100 % Baumwolle mit einem Flächengewicht von 140 g/m$^2$ wurde mit den wäßrigen Lösungen aus Beispiel 3 und aus Vergleichsbeispiel B und Magnesiumchlorid-Hexahydrat als Kondensationskatalysator mittels eines Foulards imprägniert. Die Flottenaufnahme betrug ca. 70 Gew.-%. Es wurde auf eine Restfeuchte von ca. 8 Gew.-% bei 110 °C getrocknet. Anschließend wurde bei den in der folgenden Tabelle angegebenen Bedingungen kondensiert.

| | nicht ausge-rüstetes Gewebe | Bsp. 3 | Vernetzerlösung aus Bsp. B (z.Vgl.) |
|---|---|---|---|
| Mengen an | | | |
| Vernetzerlösung [g/l] | - | 60 | 60 |
| $MgCl_2 \cdot 6H_2O$ [g/l] | - | 10 | 20 |
| Kondensationszeit [min] | - | 4 | 4 |
| Kondensations-temperatur [°C] | - | 150 | 160 |
| Trockenknitter-erholung [°] | 110 | 233 | 193 |
| Monsanto-Note | 1,5 | 3 | 3 |
| Reißfestigkeit [N] | 406 | 270 | 286 |
| Krumpfung: | | | |
| Kette [%] | 3 | 0,5 | 1 |
| Schuß [%] | 4 | 1 | 1 |
| Rest-Formaldehyd nach | | | |
| LAW 112 [ppm] | 4 | 92 | 147 |
| AATCC 112 [ppm] | 7 | 154 | 223 |
| Shirley I [ppm] | 33 | 343 | 477 |

Die Trockenknittererholung wurde nach DIN 53 890 bestimmt (Summe Kette + Schuß).

Die Mosanto-Glättenote und der Krumpfungs-Anteil wurden an 20 min bei 60 °C abgeschleudeter Wäsche ermittelt.

Die Reißfestigkeit wurde nach DIN 53 857 gemessen (Gewebeprobe 40x100 mm).

Auf dem ausgerüsteten Gewebe abspaltbarer Formaldehyd wurde nach den drei angegebenen Standard-Meßmethoden ermittelt.

Die in der Tabelle angeführten Ergebnisse zeigen, daß mit der erfindungsgemäß hergestellten Vernetzerlösung trotz milderer Kondensationsbedingungen (150 °C statt 160 °C Kondensationstemperatur)und geringerer Katalysatormenge (10 g/l statt 20 g/l) bei gleich guter Reißfestigkeit und vergleichbarer Krumpfung leicht höhere Trockenknittererholungswinkel und Monsanto-Glättenoten und deutlich niedrigere Werte an abspaltbarem Formaldehyd auf dem ausgerüsteten Gewebe erzielt werden.

## Patentansprüche

1. Verfahren zur Herstellung wäßriger Lösungen von N-Methylolethern von Carbonsäureamiden, Urethanen, Harnstoffen und Aminotriazinen durch Umsetzung der entsprechenden N-Methylolverbindungen mit einem Alkohol in wäßriger Phase bei einem pH-Wert von 0 bis 3 und anschließende Einstellung des pH-Wertes der Lösung auf 4 bis 10, dadurch gekennzeichnet, daß man die Umsetzung in Gegenwart von 0,001 bis 0,2 mol pro Mol Methylol-Gruppe Bortrifluorid, einer Bortrifluorid-Additionsverbindung oder Tetrafluorborsäure durchführt.

2. Verfahren nach Anspruch 1, dadurch gekennzeichnet, daß man es auf die Herstellung wäßriger Lösungen von N-Methylolethern der allgemeinen Formel I

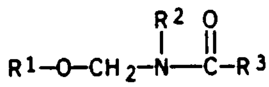

I

in der
$R^1$ für eine gegebenenfalls durch Sauerstoffatome unterbrochene $C_1$-$C_{10}$-Alkylgruppe steht,
$R^2$ Wasserstoff, die Gruppe $CH_2OR^1$ oder einen $C_1$-$C_8$-Alkylrest bezeichnet, der noch zusätzlich Hydroxylgruppen und/oder $C_1$-$C_4$-Alkoxygruppen als Substituenten tragen und durch Sauerstoffatome und/oder $C_1$-$C_4$-Alkylgruppen tragende Stickstoffatome unterbrochen sein kann, und
$R^3$ Wasserstoff, einen $C_1$-$C_{10}$-Alkylrest, einen $C_1$-$C_{10}$-Alkoxyrest, der durch Sauerstoffatome unterbrochen sein kann, oder die Gruppe ($-NR^2-CH_2OR^1$) bedeutet,
wobei die Reste $R^2$ und $R^3$ zu einem fünf- oder sechsgliedrigen Ring verbunden und im Falle von $R^3$ = ($-NR^2-CH_2OR^1$) außerdem zwei solcher Ringe über die zu den Amidstickstoffen $\alpha$-ständigen C-Atome der Reste $R^2$ zu einem bicyclischen System kondensiert sein können, durch Umsetzung der entsprechenden N-Methylolverbindungen der allgemeinen Formel II

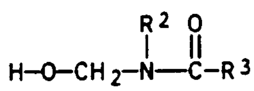

II

mit Alkoholen der allgemeinen Formel III

$R^1$-OH III

anwendet.

3. Verfahren nach Anspruch 2, dadurch gekennzeichnet, daß man es auf die Herstellung solcher N-Methylolether I anwendet, bei denen der Rest $R^3$ die Gruppe ($-NR^2-CH_2OR^1$) bedeutet.

4. Verfahren nach Anspruch 2 oder 3, dadurch gekennzeichnet, daß man es auf die Herstellung solcher N-Methylolether I anwendet, bei denen der Rest $R^2$ einen $C_1$-$C_8$-Alkylrest bezeichnet, der noch zusätzlich Hydroxylgruppen und/oder $C_1$-$C_4$-Alkoxygruppen als Substituenten tragen und durch Sauerstoffatome und/oder durch $C_1$-$C_4$-Alkylgruppen tragende Stickstoffatome unterbrochen sein kann.

5. Verfahren nach den Ansprüchen 2 bis 4, dadurch gekennzeichnet, daß man es auf die Herstellung solcher N-Methylolether I anwendet, bei denen der Rest $R^1$ für eine $C_1$-$C_3$-Alkylgruppe steht.

6. Verfahren nach den Ansprüchen 2 bis 5, dadurch gekennzeichnet, daß man es auf die Herstellung solcher N-Methylolether I anwendet, bei denen die Reste $R^2$ und $R^3$ zu einem fünf- oder sechsgliedrigen Ring verbunden sind.

7. Verfahren nach Anspruch 1, dadurch gekennzeichnet, daß man es auf die Herstellung wäßriger Lösungen von Melaminderivaten der allgemeinen Formel IV

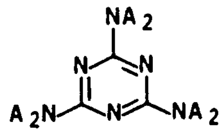

IV

in der die Reste A gleich oder verschieden sind und für Wasserstoff oder die Gruppe $CH_2OR^1$ stehen, wobei mindestens einer der Reste A die Bedeutung $CH_2OR^1$ haben muß, durch Umsetzung der entsprechenden N-Methylolmelamine der allgemeinen Formel V

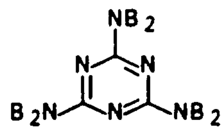

V

in der die zu A analogen Reste B Wasserstoff oder die Gruppe $CH_2OH$ bezeichnen, mit Alkoholen der allgemeinen Formel III

$R^1$-OH III

anwendet.

## Claims

1. A process for preparing an aqueous solution of an N-methylol ether of a carboxamide, urethane, urea or aminotriazine by reacting the corresponding N-methylol compound with an alcohol in an aqueous phase at pH 0-3 and subsequently adjusting the pH of the solution to 4-10, which comprises carrying out the reaction in the presence of from 0.001 to 0.2 mol of boron trifluoride, a boron trifluoride addition compound or tetrafluoroboric acid per mole of methylol group.

2. A process as claimed in claim 1 for preparing an aqueous solution of an N-methylol ether of the general formula I

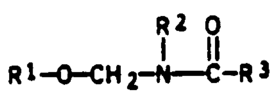

I

where

$R^1$ is $C_1$-$C_{10}$-alkyl which may be interrupted by oxygen atoms,

$R^2$ is hydrogen, $CH_2OR^1$, or $C_1$-$C_8$-alkyl which may additionally carry hydroxyl groups and/or $C_1$-$C_4$-alkoxy groups as substituents and be interrupted by oxygen atoms and/or $C_1$-$C_4$-alkyl-carrying nitrogen atoms, and

$R^3$ is hydrogen, $C_1$-$C_{10}$-alkyl, $C_1$-$C_{10}$-alkoxy which may be interrupted by oxygen atoms, or the group (-$NR^2$-$CH_2OR^1$),

or else $R^2$ and $R^3$ form a five- or six-membered ring and if $R^3$ = (-$NR^2$-$CH_2OR^1$), moreover, two such rings may be fused together via the carbon atoms on the $R^2$ radicals $\alpha$-disposed to the amide nitrogens to form a bicyclic system, by reacting the corresponding N-methylol compound of the general formula (II)

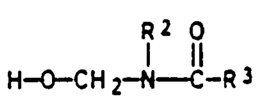

II

with an alcohol of the general formula (III)

$R^1$-OH III

3. A process as claimed in claim 2 for preparing an N-methylol ether I where $R^3$ is ($-NR^2-CH_2OR^1$).

4. A process as claimed in claim 2 or 3 for preparing an N-methylol ether I where $R^2$ is $C_1$-$C_8$-alkyl which may additionally carry hydroxyl groups and/or $C_1$-$C_4$-alkoxy groups as substituents and may be interrupted by oxygen atoms and/or by $C_1$-$C_4$-alkyl-carrying nitrogen atoms.

5. A process as claimed in any of claims 2 to 4 for preparing an N-methylol ether I where $R^1$ is $C_1$-$C_3$-alkyl.

6. A process as claimed in any of claims 2 to 5 for preparing an N-methylol ether I where $R^2$ and $R^3$ form a 5-or 6-membered ring.

7. A process as claimed in claim 1 for preparing an aqueous solution of a melamine derivative of the general formula IV

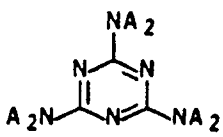

IV

where the radicals A are identical or different and each is hydrogen or $CH_2OR^1$, although at least one of the radicals A must be $CH_2OR^1$, by reacting the corresponding N-methylol melamine of the general formula V

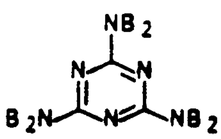

V

where the A analogs B are each hydrogen or $CH_2OH$, with an alcohol of the general formula III

$R^1$-OH III.

**Revendications**

1. Procédé de préparation de solutions aqueuses d'éthers N-méthyloliques d'amides d'acides carboxyliques, d'uréthannes, d'urées et d'aminotriazines, par la réaction des composés N-méthylolés correspondants avec un alcool, en phase aqueuse et à une valeur de pH de 0 à 3 et réglage subséquent de la valeur du pH de la solution à 4-10, caractérisé en ce que l'on entreprend la réaction en présence de 0,001 à 0,2 mole, par mole de radicaux méthylol, de trifluorure de bore, d'un adduit du trifluorure de bore ou d'acide tétrafluoroborique.

2. Procédé suivant la revendication 1, caractérisé en ce que l'on met en oeuvre en vue de la préparation de solutions aqueuses d'éthers N-méthyloliques de la formule générale I

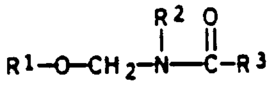

I

dans laquelle

$R^1$ représente un radical alkyle en $C_1$-$C_{10}$ éventuellement interrompu par des atomes d'oxygène,

$R^2$ représente un atome d'hydrogène, le radical $CH_2OR^1$, ou un radical alkyle en $C_1$-$C_8$ qui peut complémentairement porter des radicaux hydroxyle et/ou des radicaux alcoxy en $C_1$-$C_4$, à titre de substituants et qui peut être interrompu par des atomes d'oxygène et/ou des radicaux alkyle en $C_1$-$C_4$ portant des atomes d'oxygène et

$R^3$ représente un atome d'hydrogène, un radical alkyle en $C_1$-$C_{10}$, un radical alcoxy en $C_1$-$C_{10}$, qui peut être interrompu par des atomes d'oxygène, ou le radical (-$NR^2$-$CH_2OR^1$),

où les symboles $R^2$ et $R^3$ peuvent être liés en un cycle pentagonal ou hexagonal et, dans le cas où $R^3$ = (-$NR^2$-$CH_2OR^1$), deux cycles de ce genre peuvent en outre être condensés en un système bicyclique par l'intermédiaire des atomes de carbone des restes $R^2$ en position alpha par rapport aux azotes amidiques, par la réaction des composés N-méthylolés correspodants de la formule générale II

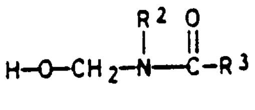

II

avec des alcools de la formule générale III

$R^1$-OH III

3. Procédé suivant la revendication 2, caractérisé en ce qu'on le met en oeuvre pour la préparation d'éthers N-méthyloliques du genre de ceux dans lesquels le symbole $R^3$ représente le radical (-$NR^2$-$CH_2OR^1$).

4. Procédé suivant la revendication 2 ou 3, caractérisé en ce qu'on le met en oeuvre pour la préparation d'éthers N-méthyloliques I du genre de ceux dans lesquels le symbole $R^2$ représente un radical alkyle en $C_1$-$C_8$, qui peut encore complémentairement porter des radicaux hydroxyle et/ou des radicaux alcoxy en $C_1$-$C_4$, à titre de substituants et qui peut être interrompu par des atomes d'oxygène et/ou des radicaux alkyle en $C_1$-$C_4$ portant des atomes d'oxygène.

5. Procédé suivant l'une quelconque des revendications 2 à 4, caractérisé en ce qu'on l'utilise en vue de la préparation d'éthers N-méthyloliques I du genre de ceux dans lesquels le symbole $R^1$ représente un radical alkyle en $C_1$-$C_3$.

6. Procédé suivant l'une quelconque des revendications 2 à 5, caractérisé en ce qu'on l'utilise pour la préparation d'éthers N-méthyloliques I du genre de ceux dans lesquels les symboles $R^2$ et $R^3$ sont liés en un cycle pentagonal ou hexagonal.

7. Procédé suivant la revendication 1, caractérisé en ce qu'on l'utilise pour la préparation de solutions aqueuses de dérivés de la mélamine de la formule générale IV

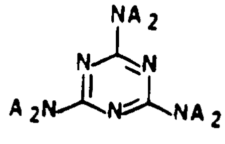

IV

dans laquelle les symboles A ont des significations identiques ou différentes et représentent chacun un atome d'hydrogène ou le radical $CH_2OR^1$ ou au moins l'un des symboles A doit désigner un radical $CH_2OR^1$, par la réaction des N-méthylolmélamines correspondantes de la formule générale V

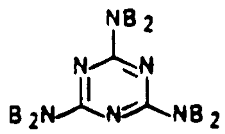

V

dans laquelle les symboles B, analogues à A, représentent chacun un atome d'hydrogène ou le radical $CH_2OH$, avec des alcools de la formule III

$R^1$-OH III.